Europäisches Patentamt

European Patent Office

Office européen des brevets

(11) Publication number: **0 061 897**
**B1**

(12) **EUROPEAN PATENT SPECIFICATION**

(45) Date of publication of patent specification: **18.03.87**

(51) Int. Cl.⁴: **F 03 G 7/06, F 01 K 25/10**

(21) Application number: **82301569.8**

(22) Date of filing: **25.03.82**

(54) **Method and apparatus for converting the internal energy of a fluid into mechanical energy capable of producing work.**

(30) Priority: **27.03.81 ES 500786**
**27.11.81 ES 507540**

(43) Date of publication of application:
**06.10.82 Bulletin 82/40**

(45) Publication of the grant of the patent:
**18.03.87 Bulletin 87/12**

(84) Designated Contracting States:
**AT BE CH DE FR GB IT LI LU NL SE**

(56) References cited:
**DE-C- 203 830**
**DE-C- 674 401**
**FR-A-1 272 098**
**FR-A-2 289 770**
**US-A-2 548 708**
**US-A-3 376 706**
**US-A-4 149 383**

(73) Proprietor: **Monreal Urzay, Dario**
**Sangüesa 12**
**Pamplona (ES)**

(72) Inventor: **Monreal Urzay, Dario**
**Sangüesa 12**
**Pamplona (ES)**

(74) Representative: **Corfield, Peter Ralph et al**
**Marks & Clerk Alpha Tower Suffolk Street**
**Queensway**
**Birmingham B1 1TT (GB)**

Courier Press, Leamington Spa, England.

**Description**

The present invention relates to a method and apparatus for converting the internal energy of a fluid into mechanical energy capable of producing work.

U.S. Patent Specification No. 4149383 discloses an internal vaporization engine in which a low boiling point liquid is heated by a hot oil jacket to cause the liquid to vaporize. The accompanying expansion to the gaseous state is used to drive a piston forming part of the engine. Thereafter the gas is cooled to a temperature below its boiling point so that it reverts to the liquid state, ready for the next cycle. The oil is heated by heat collected in a solar heating device.

U.S. Patent Specification No. 2548708 discloses a similar method of converting the vaporization of a liquid into mechanical work. The apparatus provided comprises a container which is divided by an elastic partition into a small chamber and a larger chamber. A small amount of vaporizable liquid is placed in the small chamber and the large chamber is filled with a suitable incompressible liquid, the chamber being connected to a piston and cylinder device, with hydraulic pressure in the cylinder causing displacement of the piston to transmit force. A heating electrode is provided in the small chamber to vaporize the liquid therein, whereupon the pressure produced moves the partition to force liquid out of the large chamber into the cylinder thereby moving the piston, which transmits force.

In each of these prior art methods, the temperature at which the chosen liquid boils or vaporizes is of course dependent on the pressure which must be overcome. It would naturally be desirable to obtain a larger pressure on expansion.

In contrast, the method of the present invention starts from the known principle that a gas cannot be liquified at a temperature above its critical temperature, even if said gas is compressed. Accordingly, if the critical temperature of a liquified gas is exceeded due to a rapid heating, such gas will immediately acquire the gaseous state, with the consequent increase in volume and pressure as established in the general equation of gases.

There is known what are called the "Andrews isotherms" produced from experiments made with carbonic anhydride enclosed in a tube and subjected to different temperatures, recording at all times the pressure and the volume inherent to the gas. From such experiments the critical point for carbonic anhydride was established at a temperature of 31.1°C, above which critical point or temperature it is impossible to obtain, by mere isothermic compression, the liquification of the fluid.

The object of the present invention is to provide a method for converting the internal energy of a fluid into mechanical energy capable of producing work. A further object is to provide apparatus for carrying out the method.

According to the invention, there is disclosed a method for converting the internal energy of a fluid into mechanical energy capable of producing work the method comprising a first step in which the fluid is liquified, a second step in which the liquified fluid is heated by a source of heat to convert it to the gaseous state, a third step in which the gaseous fluid is expanded in the interior of a chamber against resistance offered by means for transmitting movement, and a fourth step in which the gaseous fluid is discharged from the chamber and cooled to return it to the liquid state, characterised in that the fluid is carbonic anhydride, having two alternative states, liquid and gaseous, at temperatures below and above its critical temperature respectively, this critical temperature being higher than and close to normal ambient temperature, in that the four steps are in a closed circuit, in that in said first step the fluid is liquified at a temperature below its critical temperature and corresponding pressure, in that in said second step the liquified fluid is heated at constant volume to above its critical temperature to convert it to the gaseous state with a resultant considerable non-proportional increase in pressure of the fluid, and in that in said fourth step the gaseous fluid is cooled to below its critical temperature and corresponding pressure to return it to the liquid state, without any loss in the mass of the fluid.

Basically in a preferred embodiment, a mass of carbonic anhydride is introduced into a cylinder or a similar device which is initially maintained at a low temperature, for example 20°C, and at a pressure such that the totality of the carbonic anhydride subjected to these conditions is in a liquid state.

The mass of carbonic anhydride, in a liquid state, is then subjected to a rapid heating, resulting in its temperature being elevated above the critical temperature of the carbonic anhydride (31.1°C). So that the general equation of the gases is compiled with, the pressure of the now gaseous carbonic anhydride will increase considerably if its volume is held constant. However if the volume is allowed to change, for instance by means of the displacement of a plunger which compresses the carbonic anhydride, the expansion of the gas can be used as a means for obtaining mechanical energy. Thereafter the gaseous carbonic anhydride is recycled to its original liquid state with its initial temperature, pressure and volume.

For a better understanding of the different situations through which the carbonic anhydride passes during the mentioned method, some experiments carried out in accordance with the method of the present invention are now described by way of example.

A mass of 100 g of liquid carbonic anhydride at a pressure of 75 atmospheres and a temperature of 20°C was introduced in a steel cylinder having a diameter of 8 cm, and compressed by a plunger. The liquid occupied a volume of approximately 100 cc under such conditions. If this liquid is heated to 100°C, a pressure of about 683 atmospheres will be produced in the first instant, which pressure will displace the plunger, forcing it to move a distance of 18 cm at which point the volume is nine times greater than the initial volume and at which the pressure is equal to the initial pressure of 75 atmospheres.

Thus, this change in the volume of the gas has been utilized in the operation of displacing the plunger.

If, instead of heating the liquid carbonic anhydride to 100°C, it is heated to 35°C (which temperature is approximately 4° higher than the critical temperature of carbonic anhydride), there will be produced in the first instant a pressure of 564 atmospheres which will displace the plunger, forcing it to move a distance of 14.9 cm, at which point the volume is 7.5 times greater the initial volume and at which the pressure is equal to the initial pressure of 75 atmospheres.

The return of the carbonic anhydride to the initial conditions could be carried out by the action of a second cylinder, which will extract the $CO_2$ vaporized in the first cylinder, cooling it to 20°C and liquifying it for a successive cycle.

It should be pointed out that in this second example the temperatures at which the process operates are relatively low temperatures and can readily be reached by natural means, a fact which is highly advantageous from the point of view of energy yield.

Although the specification describes the apparatus for utilizing the internal energy the carbonic anhydride as being a cylinder provided with a plunger, it has been verified that an ideal device which proportions a better yield is that comprising a modular structure which is unitary composed of a body, in the interior of which there is again defined a chamber, divided into two parts by an elastic diaphragm, on which the expansions of the gas will act, and which will be capable of acting on a hydraulic or a pneumatic circuit or the like to utilize and multiply its own displacements.

The invention will now be described, by way of example, with reference to the accompanying drawings, in which:

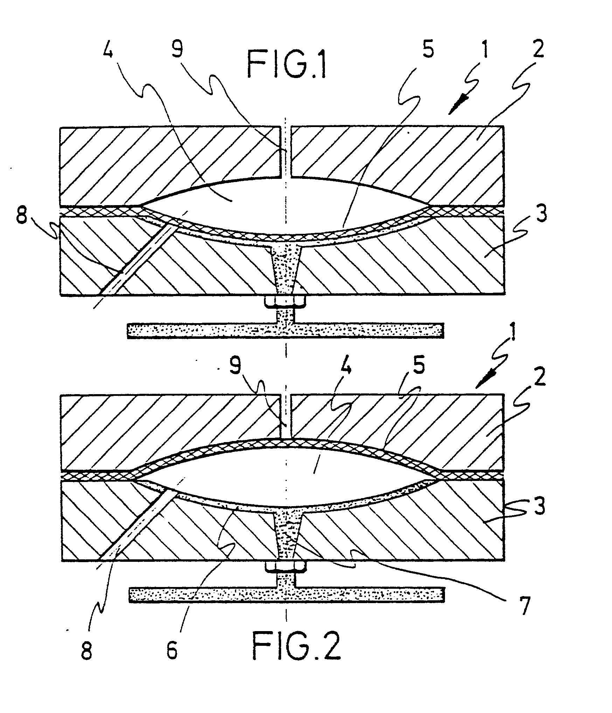

Figure 1 schematically shows apparatus for carrying out the method of the present invention, with a diaphragm thereof in a first inoperative position;

Figure 2 is a view of the same apparatus as Figure 1, with the diaphragm displaced to a second position, as a result of a push exerted thereon by vaporized gas; and

Figure 3 schematically shows further apparatus of the invention composed of two inter-associated modules, each provided with corresponding chambers and elastic diaphragms and which will function interactively.

Referring to the figures, the method for converting the internal energy of a fluid into mechanical energy capable of producing work in accordance with the invention, basically consists of liquifying carbonic anhydride, at a temperature below its critical temperature, then suddenly raising its temperature, producing a conversion to the gaseous state with a consequent increase in the pressure and temperature variables thereof, passing the gaseous fluid to an energy developing chamber in which the increase in the volume of the fluid is converted into mechanical work, i.e. the displacement of a mechanical element. Once discharge of the fluid has taken place from the chamber, by external means, which can be those derived from a similar adjacent process, it recovers its original liquid and low temperature conditions, so that it is again in a position to effect a new energy developing cycle.

The complete process can be carried out in a cylinder having conventional plungers, although a higher yield is obtained with a modular device or apparatus as will now be described.

Such apparatus comprises a block 1 formed in two parts 2 and 3 which, coupled to each other, define an interior chamber 4. Fixed between these two parts 2 and 3 is an elastic diaphragm 5 which extends through the chamber 4. The diaphragm thus divides the chamber 4 into variable volume chambers on its opposite sides since it is displaceable within the chamber in accordance with the pressures acting on it at opposite sides. The edges of the diaphragm are firmly gripped between the parts 2 and 3 of the block 1.

The lower surface of the chamber 4 is coated with a layer 6 of a material having a high calorific conductivity, which layer 9 projects outwardly to form a path 7 in the block 3 and which extends outwardly to form an integral calorific receiving base.

A fluid inlet and outlet duct 8 extends through the part 3 of the block 1, from the outer surface thereof, into the chamber 4 at one side of the diaphragm.

Part 2 of the block 1 is provided with an outlet 9 connected to the chamber 4, to which there is coupled a means for developing energy, such as a hydraulic piston or the like (not shown).

With this arrangement, when the carbonic anhydride in a liquid state is made to enter the duct 8, it will remain between the layer 6, having a high calorific conductivity and the elastic diaphragm 5. In this position heating of the path 7 and, consequently, of the layer 6 itself takes place, whereby the temperature of the liquid will exceed its critical temperature, resulting in a rapid vaporization and the consequent expansion thereof, which produces a rapid displacement of the diaphragm 5 towards the upper zone of the chamber 4. Since the upper surface of the diaphragm 5 is constantly in contact with an inelastic fluid, this fluid will thus be displaced through the outlet 9 to produce movement of any mechanical element coupled to this arrangement.

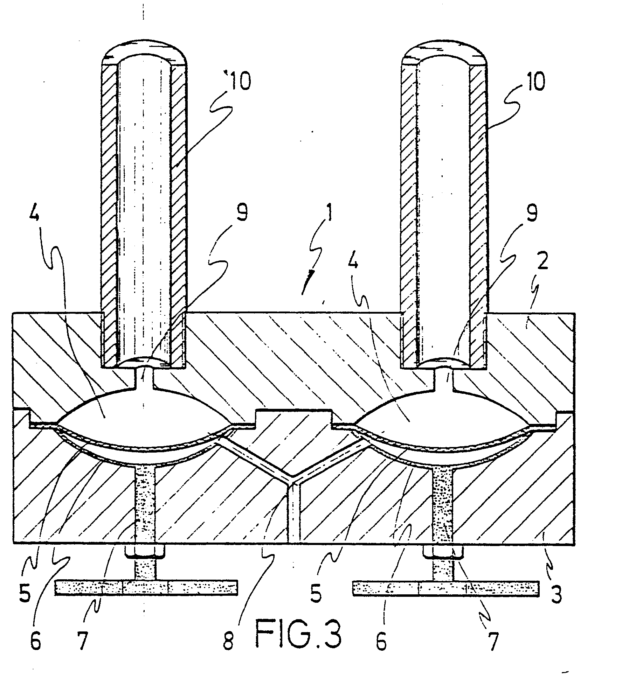

As illustrated in Figure 3, hydraulic fluid which is displaced through the duct 9, will cause the movement of a piston along its corresponding cylinder 10, and this rectilinear movement of the piston could be converted into a circular movement by means of a crankshaft or an eccentric.

For the fluid to return to its initial conditions, the gas contained in the lower part of the chamber 4 will be discharged therefrom by, for example, the reverse action of another similar device, condensing said gas in readiness for it to effect a new working cycle.

The vaporization of the liquified gas could take place in high capacity tanks filled with hydraulic fluid, in which the pressure of the gas is transmitted to the fluid through an elastic diaphragm which separates the gas from the fluid. The diaphragm prevents the leakages of gas and is capable of being adapted to the shape of the walls of the tank. The gas would press against one face of the diaphragm which separates it from the fluid, this exerting, by the vaporization of the gas, a pressure on said hydraulic fluid which, in the form of a stream, will move a turbine or a hydraulic motor, this complete process being carried out in a closed circuit so that the gasified liquid is recovered to be used again in a new cycle due to a similar and combined action which takes place in another tank, with the help of which the first tank is again filled with hydraulic fluid, discharging the gas and liquifying it to be used again. A series of tanks could also be used to obtain the pressurized fluid flow which will move the turbine or the hydraulic motor.

The liquified gas used in the invention is carbonic anhydride, which has a critical temperature of 31.1°C and a critical pressure of 73 atmospheres, which parameters permit operation under highly profitable conditions from the point of view of energy.

Distinct modules having the structure described could be interactively associated, so that each one of them proportions to its adjacent module the energy or work necessary to close the working cycle, i.e. the work produced in one of the modules could be used as the element for the absorption and subsequent liquification of the gas expanded in the associated module, producing a thermal machine having a high efficiency and yield.

**Claims**

1. A method for converting the internal energy of a fluid into mechanical energy capable of producing work, the method comprising a first step in which the fluid is liquified, a second step in which the liquified fluid is heated by a source of heat (6) to convert it to the gaseous state, a third step in which the gaseous fluid is expanded in the interior of a chamber (4) against resistance offered by means (5) for transmitting movement, and a fourth step in which the gaseous fluid is discharged from the chamber (4) and cooled to return it to the liquid state, characterised in that the fluid is carbonic anhydride, having two alternative states, liquid and gaseous, at temperatures below and above its critical temperature respectively, this critical temperature being higher than and close to normal ambient temperature, in that the four steps are in a closed circuit, in that in said first step the fluid is liquified at a temperature below its critical temperature and corresponding pressure, in that in said second step the liquified fluid is heated at constant volume to above its critical temperature to convert it to the gaseous state with a resultant considerable non-proportional increase in pressure of the fluid, and in that in said fourth step the gaseous fluid is cooled to below its critical temperature and corresponding pressure to return to the liquid state, without any loss in the mass of the fluid.

2. Apparatus for carrying out the method of claim 1, comprising a chamber (4) divided by said movement transmitting means in the form of an elastic diaphragm (5) into two parts at opposite sides thereof, the volume of the two parts being changed by displacements of the diaphragm, one of said parts being intended to contain during said second step said liquified fluid to be gasified, with the other of said parts being intended to be filled with hydraulic fluid capable of displacing a mechanical element connected to this other part of the chamber, and said source of heat (6) being associated with said one part of the chamber to transmit heat, in use, to said liquified fluid in said second step to gasify it, the source of heat being actuable from outside of the chamber, characterised in that the source of heat is a coating on an internal surface of said one part of the chamber, the coating being of a material having a high thermal transmitting capacity and extending outwardly of said one part of the chamber so that, in use, heat can be supplied to it to gasify the liquified fluid in said second step, the fluid being carbonic anhydride.

**Patentansprüche**

1. Verfahren zum Umwandeln der inneren Energie eines Fluids in mechanische Energie, welche Arbeit leisten kann, wobei das Verfahren eine erste Stufe umfasst, in welcher das Fluid verflüssigt wird, eine zweite Stufe, in welcher das verflüssigte Fluid mittels einer Wärmequelle (6) erhitzt wird unter Umwandlung in den gasförmigen Zustand, eine dritte Stufe, in welcher das gasförmige Fluid im Inneren einer Kammer (4) gegen den Widerstand, der durch Mittel (5) für die Bewegungsübertragung zustande kommt, expandiert wird, und eine vierte Stufe, in welcher das gasförmige Fluid aus der Kammer (4) herausgeführt und gekühlt wird unter Zurückbildung in den flüssigen Zustand, dadurch gekennzeichnet, dass das Fluid Kohlensäureanhydrid ist, welches bei Temperaturen unterhalb und oberhalb seiner kritischen Temperatur zwei alternative Zustände, nämlich flüssig und gasförmig, aufweist, wobei diese kritische Temperatur höher ist als und in der Nähe zu der normalen Umgebungstemperatur liegt und die vier Stufen ineinem geschlossenen Kreislauf vorliegen, in welchem bei der ersten Stufe das Fluid bei einer Temperatur unterhalb seiner kritischen Temperatur und einem entsprechenden Druck verflüssigt wird und in welchem in der zweiten Stufe das verflüssigte Fluid bei einem konstanten Volumen auf eine Temperatur oberhalb seiner kritischen Temperatur erhitzt wird, unter Umwandlung in den gasförmigen Zustand mit einer entsprechenden beachtlichen nicht-proportionalen Erhöhung des Druckes des Fluids, und dass in der vierten Stufe das gasförmige Fluid auf unterhalb seiner kritischen Temperatur und den entsprechenden Druck gekühlt wird, unter Rückführung in den flüssigen Zustand, ohne dass irgende in Verlust in der Fluidmasse eintritt.

2. Vorrichtung zur Durchführung des Verfahrens gemäss Anspruch 1, umfassend eine Kammer (4), die durch die die Bewegung übertragende Vorrichtung in Form eines elastischen Diaphragms (5) in zwei Teile an den gegenüberliegenden Seiten aufgeteilt ist, wobei das Volumen der beiden Teile durch Verschiebung des Diaphragmas verändert wird, einer der Teile dazu bestimmt ist, während der zweiten Stufe das zu vergasende verflüssigte Fluid aufzunehmen, wobei der andere der Teile dazu bestimmt ist, mit hydraulischen Fluid gefüllt zu werden, welches in der Lage ist, ein mechanisches Element, welches mit dem anderen Teil der Kammer verbunden ist, zu verschieben und die Wärmequelle (6) so mit dem einen Teil der Kammer assoziiert ist, dass während der Anwendung Wärme auf das verflüssigte Fluid in der zweiten Stufe unter Vergasung desselben übertragen wird, wobei die Wärmequelle ausserhalb der Kammer gesteuert werden kann, dadurch gekennzeichnet, dass die Wärmequelle ein Überzug auf einer inneren Oberfläche des einen Teils der Kammer ist, dass der Überzug aus einem Material mit einer hohen Wärmeübertragungskapazität besteht und sich nach aussen von dem einen Teil der Kammer so erstreckt, dass bei der Anwendung Wärme zugeführt werden kann, um in der zweiten Stufe das verflüssigte Fluid zu vergasen, wobei das Fluid Kohlensäureanhydrid ist.

**Revendications**

1. Procédé de transformation de l'énergie interne d'un fluide en énergie mécanique capable de produire du travail, le procédé comportant une première étape dans laquelle le fluide est liquéfié, une deuxième étape dans laquelle le fluide liquéfié est chauffé par une source de chaleur (6) pour le faire passer à l'état gazeux, une troisième étape dans laquelle le fluide gazeux se dilate à l'intérieur d'une chambre (4) contre la résistance présentée par un moyen (5) de transmission de mouvement, et une quatrième étape dans laquelle le fluide gazeux est évacué de la chambre (4) et refroidi pour revenir à l'état liquide, caractérisé en ce que le fluide est l'anhydride carbonique, présentant deux états alternatifs, liquide et gazeux, à des températures respectivement inférieure et supérieure à sa température critique, cette température critique étant supérieure à et proche de la température ambiante normale, en ce que les quatre étapes sont effectuées en circuit fermé, en ce que, dans ladite première étape, le fluide est liquéfié à une température en-dessous de sa température critique et à une pression correspondante, en ce que, dans ladite deuxième étape, le fluide liquéfié est chauffé à volume constant au-dessus de sa température critique pour le faire passer à l'état gazeux avec, pour résultat, une augmentation considérable et non proportionnelle de la pression du fluide, et en ce que, dans ladite quatrième étape, le fluide gazeux est refroidi en-dessous de sa température critique et à la pression correspondante, pour revenir à l'état liquide sans aucune perte dans la masse du fluide.

2. Appareillage pour la mise en oeuvre du procédé selon la revendication 1, comprenant une chambre (4) divisée par ledit moyen de transmission du mouvement sous forme d'un diaphragme élastique (5) en deux parties, sur ses côtés opposés, le volume des deux parties variant avec les déplacements du diaphragme, une desdites parties étant prévue pour contenir pendant ladite deuxième étape ledit fluide liquéfié à gazéifier, tandis que l'autre desdites parties est prévue pour être remplie d'un fluide hydraulique capable de déplacer un élément mécanique relié à cette autre partie de la chambre, et ladite source de chaleur (6) étant associée à ladite première partie de la chambre pour transmettre la chaleur, lors de l'utilisation, audit fluide liquéfié dans ladite deuxième étape pour le gazéifier, la source de chaleur étant actionnable depuis l'extérieur de la chambre, caractérisé en ce que la source de chaleur est un revêtement sur une surface interne de ladite première partie de la chambre, le revêtement étant réalisé en un matériau ayant une capacité de transmission thermique élevée et se prolongeant extérieurement hors de ladite première partie de la chambre de sorte que, lors de l'utilisation, la chaleur puisse lui être fournie pour gazeifier le fluide liquéfié dans ladite deuxième étape, le fluide étant l'anhydride carbonique.

# FIG.1

# FIG.2

FIG.3